# EUROPÄISCHE PATENTSCHRIFT

(11) **EP 1 597 861 B1**
(45) Veröffentlichungstag und Bekanntmachung des Hinweises auf die Patenterteilung: **26.09.2007**
(21) Anmeldenummer: 03785592.1
(22) Anmeldetag: 18.12.2003
(51) Int. Cl.: H04L 12/28, H04L 29/06

(54) **VERFAHREN ZUR ÜBERTRAGUNG VON DATEN IN EINEM WLAN-NETZ**
METHOD FOR TRANSMITTING DATA IN A WLAN NETWORK
PROCEDE POUR LA TRANSMISSION DE DONNEES DANS UN RESEAU LOCAL SANS FIL

(30) Priorität: 28.02.2003 DE 10308933
(43) Veröffentlichungstag der Anmeldung: 23.11.2005
(73) Patentinhaber: SIEMENS AKTIENGESELLSCHAFT, 80333 München (DE)
(72) Erfinder: GRIMMINGER, Jochen, 80638 München (DE); KRÖSELBERG, Dirk, 80469 München (DE); TSCHOFENIG, Hannes, 81735 München (DE)
(86) Internationale Anmeldenummer: PCT/DE2003/004196
(87) Internationale Veröffentlichungsnummer: WO 2004/077742

(56) Entgegenhaltungen:
- WO-A-03/030445
- AKI NIEMI: "Authentication, Authorization and Accounting in Session Initiation Protocol Networks" HELSINKI UNIVERSITY OF TECHNOLOGY, MASTER'S THESIS, GEFUNDEN IM INTERNET: WWW.TML.HUT.FI AM 5-4-2004, 7. März 2002 (2002-03-07), XP002276254 Helsinki
- ERICSSON: "Proposal to use a generic authentication scheme for SIP" 3GPP TSG WG3 S3#18, AGENDA ITEM 9.3, GEFUNDEN IM INTERNET: WWW.3GPP.ORG AM 5-4-2004, 21. - 24. Mai 2001, XP002276255 Phoenix, Arizona
- "3GPP TS 24.228 v5.0.0 - Signalling flows for the IP multimedia call control based on SIP and SDP - Stage 3" 3GPP TS 24.228 V5.0.0, XX, XX, März 2002 (2002-03), Seiten 1-106, XP002265154

## Beschreibung

Die Erfindung betrifft ein Verfahren zur Übertragung von Daten in einem WLAN-Netz sowie eine entsprechende Vorrichtung zur Übertragung solcher Daten und ein entsprechendes Datennetz.

Seit einigen Jahren verbreitet sich immer mehr die Übertragung von Daten via drahtlosen WLAN-Netzen. WLAN steht für "Wireless Local Area Network" und bezeichnet ein lokales drahtloses Netz mit Reichweiten von einigen hundert Metern. Mittlerweile besteht für die Benutzer von Endgeräten, insbesondere von Mobilfunkgeräten und Laptops, die Möglichkeit, sich an beliebigen Orten in kommerziell betriebene WLAN-Netze einzubuchen. Der Benutzer kann hierbei über sein Endgerät eine Vielzahl von WLAN-Netzen orten, wobei jedes WLAN-Netz so genannte Zugangsknoten (üblicherweise als Access Points bezeichnet) umfasst, über die sich der Benutzer Zugang zu weiteren Datennetzen, insbesondere zum Internet oder UMTS-Netzen, verschaffen kann.

Zur Authentifizierung eines Benutzers am Zugangsknoten eines WLAN-Netzes sind aus dem Stand der Technik vielfältige Verfahren bekannt. Im WLAN-Standard IEEE 802.1x wird beispielsweise das aus dem PPP-Umfeld (PPP = Point-to-Point-Protocol) bekannte EAP-Protokoll (EAP = Extensible Authentification Protocol, siehe Dokument [1]) verwendet. In dem EAP-Protokoll werden wiederum bereits aus dem Stand der Technik bekannte Authentifizierungsmechanismen, beispielsweise USIM oder AKA, eingesetzt.

Aus den Dokumenten Aki Niemi, "Authentication, Authorization and Accounting in Session Initiation Protocol Networks", Master Thesis, Espoo sowie Ericsson, "Proposal to use a generic authentication scheme for SIP", 3GPP TSG WG 3 S3#18, Tdoc: S3-0100263 ist bekannt, EAP-Nachrichten in SIP-Nachrichten zu übermitteln.

Bei den im WLAN-Umfeld verwendeten Authentifizierungsmechanismen erweist es sich als nachteilhaft, dass diese Mechanismen nicht sehr flexibel sind und damit im Wesentlichen nur Authentifizierungsdaten ohne weitergehende Informationen übermittelbar sind.

Aufgabe der Erfindung ist es deshalb, ein Verfahren zur Übertragung von Daten in einem WLAN-Netz bereitzustellen, welches eine verbesserte Authentifizierung in weiteren mit dem WLAN-Netz verbundenen Datennetzen ermöglicht.

Diese Aufgabe wird durch die unabhängigen Patentansprüche gelöst. Weiterbildungen der Erfindung ergeben sich aus den abhängigen Ansprüchen.

Bei dem erfindungsgemäßen Verfahren werden WLAN-Nachrichten in der L2-Protokoll-Schicht (L2 = Layer 2) zwischen einem Endgerät und einem Zugangsknoten des WLAN-Netzes übertragen, wobei in den WLAN-Nachrichten EAP-Nachrichten übertragen werden, welche SIP-Nachrichten mit SIP-Authentifizierungsdaten (SIP = Session Initiation Protocol) beinhalten. Das SIP-Protokoll ist hinlänglich aus dem Stand der Technik bekannt (siehe [2]) und wird in IP-basierten Netzen zur Initialisierung einer Protokollsitzung verwendet. Unter dem Begriff SIP fallen hierbei sowohl die aktuell verwendeten SIP-Protokolle als auch derzeit in der Entwicklung befindliche SIP-Protokolle, wie z.B. SIPng (= SIP next generation). Durch die Einbettung von SIP-Authentifizierungsdaten in den EAP-Nachrichten kann nicht nur eine Authentifizierung in einem WLAN-Netz stattfinden, sondern es können auch Authentifizierungen in allen mit dem WLAN-Netz verbundenen Netzen durchgeführt werden, sofern diese Netze das SIP-Protokoll verarbeiten können. Da eine Vielzahl von Datennetzen, insbesondere alle IP-basierten Datennetze, das SIP-Protokoll verstehen, wird mit dem erfindungsgemäßen Verfahren eine Authentifizierung in einer Vielzahl von Netzen ermöglicht.

Der Erfindung liegt insbesondere die Erkenntnis zugrunde, dass der relevante Teil im Nachrichtenaustausch bei der EAP-und der SIP-Authentifizierung deckungsgleich ist, so dass er zeitgleich und gekoppelt ausgeführt werden kann. Es wird hierbei das SIP-Protokoll als Transportschicht verwendet, die zwischen dem EAP-Prtokoll und einem Authentifizierungsmechanismus eingebettet ist. Der im EAP-Protokoll verwendete Authentifizierungsmechanismus wird somit durch einen SIP-Authentifizierungsmechanismus ersetzt. Ein weiterer Vorteil des erfindungsgemäßen Verfahrens besteht darin, dass bei der Authentifizierung auf das vielfach in IP-basierten Netzen verwendete und überalterte RADIUS-Protokoll (siehe [3]) verzichtet werden kann und stattdessen neuere Mechanismen verwendet werden können.

In einer bevorzugten Ausführungsform werden die SIP-Authentifizierungsdaten mit einem Authentifizierungsmechanismus ausgewählt aus Kerberos, Digest, AKA, USIM erzeugt. All diese Authentifizierungsmechanismen sind hinlänglich aus dem Stand der Technik bekannt, so dass nicht näher auf diese Mechanismen eingegangen wird.

Um die SIP-Authentifizierungsdaten zu verarbeiten, werden in einer besonders bevorzugten Ausführungsform ein oder mehrere SIP-Proxy-CSCF-Server (CSCF = Call State Control Function) eingesetzt. Diese Server sind aus dem Stand der Technik bekannt und können die SIP-Authentifizierungsdaten verarbeiten und eine entsprechende Authentifizierung durchführen.

In einer weiteren bevorzugten Ausführungsform beinhalten die SIP-Nachrichten ferner SDP-Nachrichten (SDP = Session Description Protocol). Das SDP-Protokoll ist ebenfalls aus dem Stand der Technik bekannt (siehe Dokument [4]) und dient zur Beschreibung von Protokollsitzungen in IP-basierten Netzen. Unter dem Begriff SDP fallen hierbei sowohl die aktuell verwendeten SDP-Protokolle als auch derzeit in der Entwicklung befindliche SDP-Protokolle, wie z.B SDPng (= SDP next generation).

In einer weiteren bevorzugten Ausführungsform der Erfindung enthalten die WLAN-Nachrichten spezifische Nachrichten über mögliche Datenverbindungen des Endgeräts via dem Zugangsknoten zu mit dem WLAN-Netz verbindbaren Netzen. Die spezifischen Nachrichten sind hierbei insbesondere wenigstens teilweise in den im vorangegangenen erwähnten SDP-Nachrichten enthalten. Hierdurch wird es ermöglicht, über das WLAN-Protokoll Anfragen betreffend mögliche Datenverbindungen an den Zugangsknoten bzw. an mit dem Zugangsknoten verbundene Netze zu richten, so dass vorher abgeklärt werden kann, ob eine vom Benutzer des Endgeräts erwünschte Datenverbindung überhaupt möglich ist bzw. welche Datenverbindungen überhaupt über das WLAN-Netz herstellbar sind.

Die spezifischen Nachrichten beinhalten vorzugsweise Anfragen und/oder Informationen bezüglich einer oder mehrerer Datenverbindungsarten und/oder Datenverbindungsqualitäten und/oder Datenverbindungskosten und/oder von der Datenverbindung bereitgestellter Dienste. Dem Benutzer des Endgeräts wird somit eine Vielzahl von Entscheidungskriterien gegeben, nach denen er seine gewünschte Datenverbindung spezifizieren kann.

In einer besonders bevorzugten Ausführungsform werden die spezifischen Nachrichten ausgewertet und in Abhängigkeit von der Auswertung wird entschieden, ob bzw. welche Datenverbindung des Endgeräts via dem Zugangsknoten zu mit dem WLAN-Netz verbindbaren Netzen zur Datenübertragung verwendet wird. Hierdurch kann dem Benutzer des Endgeräts automatisiert die von ihm erwünschte Datenverbindung bereitgestellt werden bzw. dem Benutzer kann mitgeteilt werden, dass die für seine Zwecke erforderliche Datenverbindung überhaupt nicht über das WLAN-Netz möglich ist. Die Auswertung der spezifischen Nachrichten erfolgt vorzugsweise in den bereits im vorangegangenen erwähnten SIP-Proxy-CSCF-Servern.

In einer besonders bevorzugten Ausführungsform entsprechen die WLAN-Nachrichten dem WLAN-Standard IEEE 802.11. Ferner umfassen die mit dem WLAN-Netz verbindbaren Netze vorzugsweise ein oder mehrere 3GPP- und/oder IP-Netze.

Neben dem oben beschriebenen erfindungsgemäßen Übertragungsverfahren umfasst die Erfindung auch eine Vorrichtung zur Übertragung von Daten in einem WLAN-Netz, wobei die Vorrichtung beinhaltet:
- einen Zugangsknoten, wobei zwischen dem Zugangsknoten und einem Endgerät WLAN-Nachrichten in der L2-Protokoll-Schicht übertragbar sind und in den WLAN-Nachrichten EAP-Nachrichten übermittelbar sind, die SIP-Nachrichten mit SIP-Authentifizierungsdaten beinhalten;
- eine mit dem Zugangsknoten (AP) verbundene Recheneinheit zur Auswertung der SIP-Authentifizierungsdaten.

In einer besonders bevorzugten Ausführungsform der erfindungsgemäßen Vorrichtung umfasst die Recheneinheit einen SIP-Proxy-CSCF-Server. Ferner ist die Recheneinheit vorzugsweise in dem Zugangsknoten integriert.

Darüber hinaus umfasst die Erfindung ein Datennetz mit einem WLAN-Netz und einem oder mehreren mit dem WLAN-Netz verbindbaren Datenetzen, wobei das Datennetz derart ausgestaltet ist, dass das oben beschriebene erfindungsgemäße Verfahren durchführbar ist.

Ausführungsbeispiele der Erfindung werden nachfolgend anhand der beigefügten Zeichnungen beschrieben.

Es zeigen:
- Figur 1: die schematische Darstellung eines Datennetzes, in dem das erfindungsgemäße Datenübertragungsverfahren durchführbar ist, und
- Figur 2: ein Schema, welches die Übertragung von Nachrichten mittels des EAP-Protokolls verdeutlicht.

Das in Figur 1 schematisch dargestellte Datennetz umfasst ein WLAN-Netz 1, ein IP-Netz 2 sowie ein 3GPP-Netz 3. Ein Benutzerendgerät UE, welches beispielsweise ein Mobilfunkgerät oder ein Laptop sein kann, ist drahtlos (wie durch den gezackten Pfeil angedeutet), mit einem Zugangspunkt AP (AP = Access Point) des WLAN-Netzes verbunden. Der Zugangspunkt AP steht wiederum mit einem Proxy-CSCF-Server P-CSCF in Verbindung. Solche Server sind bereits aus dem Stand der Technik bekannt und dienen zur Verarbeitung von SIP/SDP-Nachrichten.

Mit dem Zugangsknoten AP bzw. mit dem P-CSCF-Server P-CSCF ist ein IP-Netz 2 verbunden. Dieses Netz ist wiederum mit einem 3GPP-Netz 3 verbunden. Das 3GPP-Netz umfasst eine Vielzahl von Komponenten mit den Bezeichnungen SGSN, GGSN, HSS, IMS, P-CSCF, I-CSCF, S-CSCF sowie PDGW. Die mit diesen Abkürzungen bezeichneten Komponenten sind allseits bekannte Bausteine eines 3GPP-Netzes und die sich hinter den Abkürzungen verbergenden Ausdrücke sind dem Fachmann allgemein bekannt. Da für das erfindungsgemäße Verfahren der Aufbau des 3GPP-Netzes keine entscheidende Rolle spielt, wird im Folgenden auf diesen Aufbau nicht näher eingegangen. Es sei lediglich erwähnt, dass das IP-Netz über den Gateway PDGW mit dem 3GPP-Netz verbunden ist.

In dem erfindungsgemäßen Verfahren werden zwischen dem Benutzerendgerät UE und dem Zugangsknoten AP WLAN-Nachrichten in der L2-Protokoll-Schicht ausgetauscht, wobei in den WLAN-Nachrichten EAP-Nachrichten übertragen werden, die wiederum SIP-Nachrichten mit SIP-Authentifizierungsdaten beinhalten. Diese SIP-Nachrichten werden ohne die Zuordnung einer IP-Adresse erzeugt. Es wird sich hierbei die Tatsache zunutze gemacht, dass das EAP-Protokoll einen Tunnel für generische Authentifizierungsmechanismen zur Verfügung stellt. In diesem Tunnel werden wiederum SIP-Authentifizierungsdaten transportiert, welche eine Authentifizierung an dem mit dem Zugangspunkt AP verbundenen SIP-Proxy-CSCF-Server ermöglichen. Die Authentifizierungsdaten können ferner an weitere Rechner in dem IP-Netz 2 bzw. in dem 3GPP-Netz 3 übertragen werden, so dass auch an weiter entfernten Rechnern eine Authentifizierung durchgeführt werden kann. Dies ist in Figur 1 durch die Pfeile P1, P2, P3, P4 und P5 angedeutet, welche einen Datenfluss zur Authentifizierung des Endgeräts UE an dem Rechner S-CSCF des 3GPP-Netzes 3 darstellen. Generell wird aus dem Inhalt der SIP-Nachrichten deutlich, welcher. Server für das Endgerät UE zur Authentifizierung zuständig ist und dieser Server wird über die SIP-Nachrichten angesprochen.

Da SIP-Authentifizierungsdaten in allen drei Netzen 1, 2 und 3 verarbeitet werden können, kann als einziges Protokoll das SIP-Protokoll zur Authentifizierung in den Netzen 1, 2 und 3 verwendet werden. Als Authentifizierungsmechanismen werden hierbei insbesondere bereits aus dem Stand der Technik bekannte Mechanismen, wie zum Beispiel Kerberos, Digest, AKA, USIM und ähnliche eingesetzt. Ein besonderer Vorteil des Verfahrens besteht darin, dass in dem IP-Netz 2 auf die Verwendung einer Authentifizierung mittels des überalterten RADIUS-Protokolls verzichtet werden kann. Zwar existiert als Nachfolger der RADIUS-Protokolls bereits das sog. Diameter-Protokoll, jedoch ist dieses Protokoll nicht sehr verbreitet. Im Gegensatz dazu ist das SIP-Protokoll ein sehr häufig in Netzwerken, vor allem auch in 3GPP-Netzen, eingesetztes Protokoll.

In dem hier beschriebenen Ausführungsbeispiel des erfindungsgemäßen Verfahrens beinhalten die SIP-Nachrichten ferner SDP-Nachrichten, in denen Anfragen bzw. Informationen über mögliche Datenverbindungen des Endgeräts UE via dem Zugangsknoten AP zu dem IP-Netz und/oder dem 3GPP-Netz gespeichert sind.

Diese Anfragen bzw. Informationen können insbesondere einen Zugangswunsch beinhalten, der von dem Benutzer des Endgeräts festgelegt wird. Beispielsweise kann der Zugangswunsch die Art der Datenverbindung betreffen, mit der eine Datenübertragung via dem Zugangsknoten stattfinden soll. Zum Beispiel kann der Benutzer festlegen, dass die Datenverbin-dung über das Internet erfolgen soll. Ferner kann eine solche Anfrage eine vom Benutzer erwünschte Bandbreite bzw. ein Delay oder Jitter der Datenverbindung betreffen. Es ist somit eine Auswahl des Providers, beispielsweise in fremden ausländischen Netzen, nach vorbestimmten Kriterien möglich.

In Figur 2 ist beispielhaft dargestellt, wie die erfindungsgemäße Authentifizierung mittels des EAP-Protokolls erfolgt. Zuhächst wird vom Benutzerendgerät UE eine EAPOL-Start-Nachricht an den Zugangsknoten AP und dem mit dem Zugangsknoten verbundenen P-CSCF-Server gesendet. Anschließend wird vom Zugangsknoten eine EAP-Request/Identity-Nachricht an das Endgerät UE gesendet. Diese ersten beiden Nachrichten dienen zur Initialisierung des EAP-Protokolls. Anschließend wird durch den Austausch von vier weiteren Nachrichten, die als EAP-Response/Identity, EAP-Request, EAP-Response und EAP-Success bezeichnet sind, die eigentliche Authentifizierung durchgeführt. In dem EAP-Protokoll werden gemäß den erfindungsgemäßen Verfahren SIP-Authentifizierungsdaten des SIP-Protokolls transportiert, wobei in diesem SIP-Protokoll wiederum bekannte Authentifizierungsmechanismen verwendet werden.

### Literaturverzeichnis :

[1] http://www.ietf.org/rfc/rfc2284.txt
[2] http://www.ietf.org/rfc/rfc3261.txt
[3] http://www.ietf.org/rfc/rfc2865.txt
[4] http://www.ietf.org/rfc/rfc2327.txt

## Patentansprüche

1. Verfahren zur Übertragung von Daten in einem WLAN-Netz (1), bei dem WLAN-Nachrichten in der L2-Protokoll-Schicht zwischen einem Endgerät (UE) und einem Zugangsknoten (AP) des WLAN-Netzes (1) übertragen werden, **dadurch gekennzeichnet, dass** in den WLAN-Nachrichten EAP-Nachrichten übertragen werden, die SIP-Nachrichten mit SIP-Authentifizierungsdaten beinhalten.

2. Verfahren nach Anspruch 1, bei dem die SIP-Authentifizierungsdaten mit einem Authentifizierungsmechanismus ausgewählt aus Kerberos, Digest, AKA, USIM erzeugt werden.

3. Verfahren nach einem der vorhergehenden Ansprüche, bei dem die SIP-Authentifizierungsdaten in einem oder mehreren SIP-Proxy-CSCF-Servern ausgewertet werden.

4. Verfahren nach einem der vorhergehenden Ansprüche, bei dem die SIP-Nachrichten ferner SDP-Nachrichten beinhalten.

5. Verfahren nach einem der vorhergehenden Ansprüche, bei dem die WLAN-Nachrichten spezifische Nachrichten über mögliche Datenverbindungen des Endgeräts (UE) via dem Zugangsknoten (AP) zu mit dem WLAN-Netz (1) verbindbaren Netzen (2, 3) enthalten.

6. Verfahren nach Anspruch 4 und 5, bei dem die spezifischen Nachrichten wenigstens teilweise in den SDP-Nachrichten gespeichert sind.

7. Verfahren nach Anspruch 5 oder 6, bei dem die spezifischen Nachrichten Anfragen und/oder Informationen bezüglich einer oder mehrerer Datenverbindungsarten und/oder Datenverbindungsqualitäten und/oder Datenverbindungskosten und/oder von der Datenverbindung bereitgestellter Dienste beinhalten.

8. Verfahren nach einem der Ansprüche 5 bis 7, bei dem die spezifischen Nachrichten ausgewertet werden und in Abhängigkeit von der Auswertung entschieden wird, ob und/oder welche Datenverbindung des Endgerät (UE) via dem Zugangsknoten (AP) zu mit dem WLAN-Netz (1) verbindbaren Netzen (2, 3) zur Datenübertragung verwendet wird.

9. Verfahren nach Anspruch 8, bei dem die Auswertung der spezifischen Nachrichten in einem oder mehreren SIP-Proxy-CSCF-Servern erfolgt.

10. Verfahren nach einem der Ansprüche 5 bis 9, bei dem die mit dem WLAN-Netz verbindbaren Netze ein oder mehrere 3GPP-und/oder IP-Netze umfassen.

11. Verfahren nach einem der vorhergehenden Ansprüchen, bei dem die WLAN-Nachrichten Nachrichten gemäß dem WLAN-Standard IEEE 802.11 sind.

12. Vorrichtung zur Übertragung von Daten in einem WLAN-Netz (1), umfassend
- einen Zugangsknoten (AP), wobei zwischen dem Zugangsknoten (AP) und einem Endgerät (UE) WLAN-Nachrichten in der L2-Protokoll-Schicht übertragbar sind;
- eine mit dem Zugangsknoten (AP) verbundene Recheneinheit zur Auswertung der SIP-Authentifizierungsdaten;
**dadurch gekennzeichnet, dass** in den WLAN-Nachrichten EAP-Nachrichten übermittelbar sind, die SIP-Nachrichten mit SIP-Authentifizierungsdaten beinhalten;

13. Vorrichtung nach Anspruch 12, bei dem die Recheneinheit einen SIP-Proxy-CSCF-Server umfasst.

14. Vorrichtung nach Anspruch 12 oder 13, bei dem die Recheneinheit in dem Zugangsknoten (AP) integriert ist.

15. Datennetz umfassend ein WLAN-Netz (1) mit einer Vorrichtung nach Anspruch 12 und ein oder mehrere mit dem WLAN-Netz (1) verbindbare Netze (2,3), wobei das Datennetz derart ausgestaltet ist, dass ein Verfahren nach einem der Ansprüche 1 bis 11 durchführbar ist.

## Claims

1. Method for transmitting data in a WLAN network (1), wherein WLAN messages are transmitted between a terminal device (UE) and an access node (AP) of the WLAN network (1) in the L2 protocol layer, **characterised in that** EAP messages are transmitted in the WLAN messages, said EAP messages containing SIP messages with SIP authentication data.

2. Method according to claim 1, wherein the SIP authentication data is generated using an authentication mechanism chosen from Kerberos, Digest, AKA, USIM, etc.

3. Method according to one of the preceding claims, wherein the SIP authentication data is evaluated in one or more SIP Proxy CSCF servers.

4. Method according to one of the preceding claims, wherein the SIP messages additionally contain SDP messages.

5. Method according to one of the preceding claims, wherein the WLAN messages contain specific messages concerning possible data connections of the terminal device (UE) via the access node (AP) to networks (2, 3) that can be connected to the WLAN network (1).

6. Method according to claim 4 and 5, wherein the specific messages are stored at least in part in the SDP messages.

7. Method according to claim 5 or 6, wherein the specific messages contain requests and/or information relating to one or more data connection types and/or qualities of data connection and/or data connection costs and/or services provided by the data connection.

8. Method according to one of claims 5 to 7, wherein the specific messages are evaluated and, depending on the results of the evaluation, it is decided whether the data connection is possible and/or which data connection of the terminal device (UE) via the access node (AP) will be used for the data transmission to networks (2, 3) that can be connected to the WLAN network (1).

9. Method according to claim 8, wherein the specific messages are evaluated in one or more SIP Proxy CSCF servers.

10. Method according to one of claims 5 to 9, wherein the networks that can be connected to the WLAN network comprise one or more 3GPP and/or IP networks.

11. Method according to one of the preceding claims, wherein the WLAN messages are messages conforming to the WLAN standard IEEE 802.11.

12. Device for transmitting data in a WLAN network (1), comprising
- an access node (AP), with WLAN messages being able to be transmitted between the access node (AP) and a terminal device (UE) in the L2 protocol layer, and
- a computing unit connected to the access node (AP) for the purpose of evaluating the SIP authentication data,
**characterised in that** EAP messages can be transmitted in the WLAN messages, said EAP messages containing SIP messages with SIP authentication data.

13. Device according to claim 12, wherein the computing unit comprises a SIP Proxy CSCF server.

14. Device according to claim 12 or 13, wherein the computing unit is integrated in the access node (AP).

15. Data network comprising a WLAN network (1) having a device according to claim 12 and one or more networks (2, 3) that can be connected to the WLAN network (1), wherein the data network is embodied in such a way that a method according to one of claims 1 to 11 can be performed.

## Revendications

1. Procédé pour la transmission de données dans un réseau WLAN (1), dans lequel des messages WLAN sont transmis dans la couche de protocole L2 entre un terminal (UE) et un noeud d'accès (AP) du réseau WLAN (1), **caractérisé en ce que** des messages EAP contenant des messages SIP avec des données d'authentification SIP sont transmis dans les messages WLAN.

2. Procédé selon la revendication 1, dans lequel les données d'authentification SIP sont produites grâce à un mécanisme d'authentification sélectionné parmi Kerberos, Digest, AKA, USIM.

3. Procédé selon l'une des revendications précédentes, dans lequel les données d'authentification SIP sont analysées dans un ou plusieurs serveurs SIP-Proxy CSCF.

4. Procédé selon l'une des revendications précédentes, dans lequel les messages SIP contiennent, en outre, des messages SDP.

5. Procédé selon l'une des revendications précédentes, dans lequel les messages WLAN contiennent des messages spécifiques sur des liaisons de données possibles du terminal (UE) vers des réseaux (2, 3) pouvant être reliés au réseau WLAN (1), passant par le noeud d'accès (AP).

6. Procédé selon les revendications 4 et 5, dans lequel les messages spécifiques sont enregistrés, au moins partiellement, dans les messages SDP.

7. Procédé selon la revendication 5 ou 6, dans lequel les messages spécifiques contiennent des demandes et/ou informations sur un ou plusieurs types de liaison de données et/ou la qualité des liaisons de données et/ou le coût des liaisons de données et/ou les services mis à disposition par la liaison de données.

8. Procédé selon l'une des revendications 5 à 7, dans lequel les messages spécifiques sont analysés et on décide, en fonction de l'analyse, si une et/ou quelle liaison de données du terminal (UE) vers des réseaux (2, 3) pouvant être reliés au réseau WLAN (1), et passant par le noeud d'accès (AP), est utilisée pour la transmission de données.

9. Procédé selon la revendication 8, dans lequel l'analyse des messages spécifiques a lieu dans un ou plusieurs serveurs SIP-Proxy CSCF.

10. Procédé selon l'une des revendications 5 à 9, dans lequel les réseaux pouvant être reliés au réseau WLAN comprennent un ou plusieurs réseaux 3GPP et/ou IP.

11. Procédé selon l'une des revendications précédentes, dans lequel les messages WLAN sont des messages répondant à la norme WLAN IEEE 802.11.

12. Dispositif pour la transmission de données dans un réseau WLAN (1), comprenant :
- un noeud d'accès (AP), des messages WLAN pouvant être transmis dans la couche de protocole L2 entre le noeud d'accès (AP) et un terminal (UE) ;
- une unité de calcul reliée au noeud d'accès (AP) pour l'analyse des données d'authentification SIP ;
**caractérisé en ce que** des messages EAP contenant des messages SIP avec des données d'authentification SIP peuvent être transmis dans les messages WLAN.

13. Dispositif selon la revendication 12, dans lequel l'unité de calcul comprend un serveur SIP-Proxy CSCF.

14. Dispositif selon la revendication 12 ou 13, dans lequel l'unité de calcul est intégrée dans le noeud d'accès (AP).

15. Réseau de données comprenant un réseau WLAN (1) avec un dispositif selon la revendication 12 et un ou plusieurs réseaux (2, 3) pouvant être reliés au réseau WLAN (1), le réseau de données étant réalisé de manière à ce qu'un procédé selon l'une des revendications 1 à 11 puisse être exécuté.
